# EUROPEAN PATENT APPLICATION

(11) **EP 4 817 693 A1**
(43) Date of publication of application: **07.10.2026**
(21) Application number: 24934001.9
(22) Date of filing: 13.11.2024
(51) Int. Cl.: A63B 26/00, E04H 3/14, G09B 9/00

(54) **HYPERGRAVITY FACILITY**

(30) Priority: 01.04.2024 JP 2024059088
(71) Applicant: KAJIMA CORPORATION, Tokyo 107-8388 (JP)
(72) Inventor: ONO, Takuya, Tokyo 107-8388 (JP)
(74) Representative: Viering, Jentschura & Partner mbB Patent- und Rechtsanwälte
(86) International application number: PCT/JP2024/040350
(87) International publication number: WO 2025/210953

(57) **Abstract**

A hypergravity facility that generates, on the earth, artificial gravity larger than the gravity of the earth includes a rotating body that rotates around a vertical rotation axis, generating the artificial gravity on a base surface inside the rotating body as a resultant force of the gravity of the earth and a centrifugal force caused by rotation of the rotating body, wherein in a cross-sectional view orthogonal to the rotation axis, the base surface extends along a circle centered on the rotation axis, and in a cross-sectional view including the rotation axis, the base surface forms a curve bulging outward.

## Description

### Technical Field

The present disclosure relates to a hypergravity facility.

### Background Art

Conventionally, as a technique in such a field, a hypergravity environment providing training apparatus described in Patent Literature 1 below is known. This apparatus includes a turntable rotating around a rotation axis, and a plurality of hypergravity chambers provided on the turntable. A training room is provided in each hypergravity chamber, and an inclination of a floor of the training room can be adjusted by an angle adjusting device. In this apparatus, a resultant force of a centrifugal force caused by rotation of the turntable and the hypergravity chamber and gravity is generated in the training room as artificial gravity. The inclination of the floor is adjusted such that this artificial gravity is applied perpendicularly to the floor of the training room.

### Citation List

### Patent Literature

[Patent Literature 1] Japanese Unexamined Patent Publication No. 2019-187782

### Summary of Invention

### Technical Problem

However, with the structure of this apparatus, it is difficult to secure a space for a user's free exercise. For example, when training for the purpose of improving the bone density of the user is performed, it is desired that the user not only stay under hypergravity but also perform activities involving large movements such as walking, jumping, and climbing stairs under hypergravity. However, with the structure of this apparatus, there is a limit to the expansion of the space of the training room, and therefore it is difficult to secure a sufficient space as described above. Therefore, the present disclosure describes a hypergravity facility that easily secures the user's freedom of exercise under hypergravity.

### Solution to Problem

The gist of the present disclosure resides in the following [1] to [8].
[1] A hypergravity facility that generates, on the earth, artificial gravity larger than the gravity of the earth, the hypergravity facility comprising: a rotating body that rotates around a vertical rotation axis, generating the artificial gravity on a base surface inside the rotating body as a resultant force of the gravity of the earth and a centrifugal force caused by rotation of the rotating body, wherein in a cross-sectional view orthogonal to the rotation axis, the base surface extends along a circle centered on the rotation axis, and in a cross-sectional view including the rotation axis, the base surface forms a curve bulging outward.

A direction orthogonal to the rotation circumferential direction among the in-plane directions of the base surface is hereinafter referred to as a "meridional direction". According to this hypergravity facility, by securing the length of the base surface in the rotation circumferential direction and the width of the base surface in the meridional direction, it is possible to secure the user's freedom of exercise on the base surface under hypergravity. However, when the user moves on the base surface in the meridional direction, the intersection angle between the base surface and the artificial gravity may fluctuate. On the other hand, in the hypergravity facility of the above [1], since the base surface forms a curve bulging outward in a cross-sectional view including the rotation axis, the fluctuation of the intersection angle between the base surface and the artificial gravity when the user moves in the meridional direction is reduced.

[2] The hypergravity facility according to [1], wherein the base surface is at least a part of a paraboloid of revolution formed by rotating a parabola around the rotation axis.

In this case, due to the property of the paraboloid of revolution, there is a special rotation speed of the rotating body such that artificial gravity perpendicular to the base surface can be obtained simultaneously at all points on the base surface. That is, by appropriately selecting the rotation speed of the rotating body, it is possible to make a setting such that artificial gravity perpendicular to the base surface can be obtained simultaneously at all points on the base surface. According to such a setting, all users on the base surface can stand straight in a posture in which the vertical direction of their bodies is orthogonal to the base surface. Therefore, all users can perform natural movements on the base surface similar to those on a horizontal surface on the ground. In this way, a hypergravity environment that enables natural movements can be simultaneously provided to a large number of users.

Further, even when the user moves over a relatively large distance on the base surface, a state in which the artificial gravity is perpendicular to the base surface is always maintained. Therefore, the base surface feels like a horizontal surface from the viewpoint of the user, and the user can perform natural movements similar to those on a horizontal surface on the ground. Further, if the user moves in the meridional direction on the base surface, the magnitude of the artificial gravity at the staying place changes. Therefore, the user can adjust the magnitude of the artificial gravity acting on himself/herself by a simple method such as moving in the meridional direction on the base surface.

[3] The hypergravity facility according to [2], wherein when a height from a bottom of the paraboloid of revolution to a focal point is p [m] and a gravitational acceleration of the earth is G [m/s²], a rotation speed Ns [rpm] of the rotating body is expressed by the following Formula (1).
[Formula 1] $Ns = \sqrt{\frac{G}{2 p}} \times \frac{30}{π}$ (1)

By setting the rotation speed of the rotating body to the rotation speed expressed by the above Formula (1), it is possible to make a setting such that artificial gravity perpendicular to the base surface can be obtained simultaneously at all points on the base surface.

[4] The hypergravity facility according to any one of [1] to [3], comprising: a moving body that moves outside the rotating body in a rotation circumferential direction of the rotating body; and an entrance/exit section that is installed in the rotating body, is capable of moving an entering person or a carried-in object transferred from the moving body to the inside of the rotating body through the base surface, and is capable of transferring an exiting person and a carried-out object moved from the inside of the rotating body to the outside through the base surface to the moving body.

[5] The hypergravity facility according to [4], wherein the moving body is a traveling vehicle that travels in the rotation circumferential direction of the rotating body on a travel path that is immovable with respect to the earth and is located outside the rotating body, the travel path in a cross-sectional view including the rotation axis has a shape that separates from the rotation axis in a rotation radial direction as it moves upward, a tangent line of a lower end portion of the travel path in the cross-sectional view is substantially horizontal, and a tangent line of an upper end portion of the travel path in the cross-sectional view is substantially orthogonal to a direction of a resultant force of a centrifugal force acting on the moving body and the gravity of the earth when an angular velocity of the moving body is equal to an angular velocity of the rotating body at the upper end portion.

[6] The hypergravity facility according to any one of [1] to [5], wherein the base surface is provided with a plurality of partition walls that rise in a direction of the artificial gravity and partition the base surface in a meridional direction, each of the partition walls is configured by connecting a portion extending in a circumferential direction of the rotating body and a portion extending in the meridional direction when viewed from the direction of the artificial gravity, and one region partitioned by the partition walls is configured by alternately connecting a room portion wide in the meridional direction and a connection passage connecting the room portions in a rotation circumferential direction.

[7] The hypergravity facility according to [6], wherein an entrance/exit that enables movement between the adjacent regions is provided in a portion of the partition walls that extends in the meridional direction.

[8] The hypergravity facility according to any one of [1] to [7], wherein the base surface is at least a part of a spherical surface having a center on the rotation axis.

### Advantageous Effects of Invention

According to the present disclosure, it is possible to provide a hypergravity facility that easily secures a user's freedom of exercise under hypergravity.

### Brief Description of Drawings

[FIG. 1] FIG. 1(a) is a perspective view of an appearance of a hypergravity facility according to a first embodiment, and FIG. 1(b) is a cross-sectional view of the hypergravity facility with a plane orthogonal to a rotation axis as a cross section.
[FIG. 2] FIG. 2 is a cross-sectional view of the hypergravity facility with a plane including the rotation axis as a cross section.
[FIG. 3] FIG. 3(a) is a side view showing another example of a support mechanism and a rotation mechanism of a rotating body, and FIG. 3(b) is a side view showing still another example of the support mechanism and the rotation mechanism of the rotating body.
[FIG. 4] FIG. 4(a) is a cross-sectional view of transport equipment with a plane including the rotation axis as a cross section, and FIG. 4(b) is a plan view thereof.
[FIG. 5] FIGS. 5(a) to 5(c) are cross-sectional views sequentially showing operations of the transport equipment.
[FIG. 6] FIGS. 6(a) to 6(c) are cross-sectional views sequentially showing operations of the transport equipment following FIG. 5.
[FIG. 7] FIGS. 7(a) and 7(b) are cross-sectional views showing another example of the transport equipment.
[FIG. 8] FIG. 8(a) is a diagram showing a connection path for allowing a vehicle to come and go between rotating bodies, and FIG. 8(b) is a diagram showing still another example of the transport equipment.
[FIG. 9] FIG. 9 is a plan view showing a partition wall partitioning a training field.
[FIG. 10] FIG. 10 is a cross-sectional view of a hypergravity facility of a second embodiment with a plane orthogonal to the rotation axis as a cross section.
[FIG. 11] FIG. 11(a) is a diagram showing an elevator provided at a position of a bottom portion of a floor surface, FIG. 11(b) is a perspective view showing another example of a shape of the floor surface, and FIG. 11(c) is a perspective view showing still another example of the shape of the floor surface.
[FIG. 12] FIG. 12 is a cross-sectional view showing an example of a multi-story building provided on the floor surface.

### Description of Embodiments

Hereinafter, embodiments of a hypergravity facility according to the present disclosure will be described in detail with reference to the drawings. In each drawing, features of components of the hypergravity facility may be exaggerated, and shapes and dimensional ratios of each element do not necessarily match between the drawings. The same or equivalent components are denoted by the same reference numerals, and redundant description will be omitted.

### [First Embodiment]

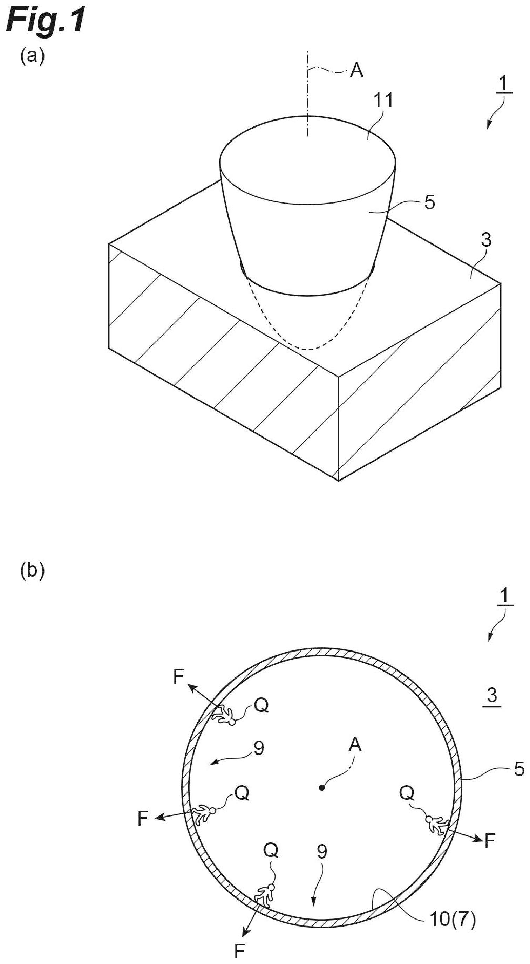

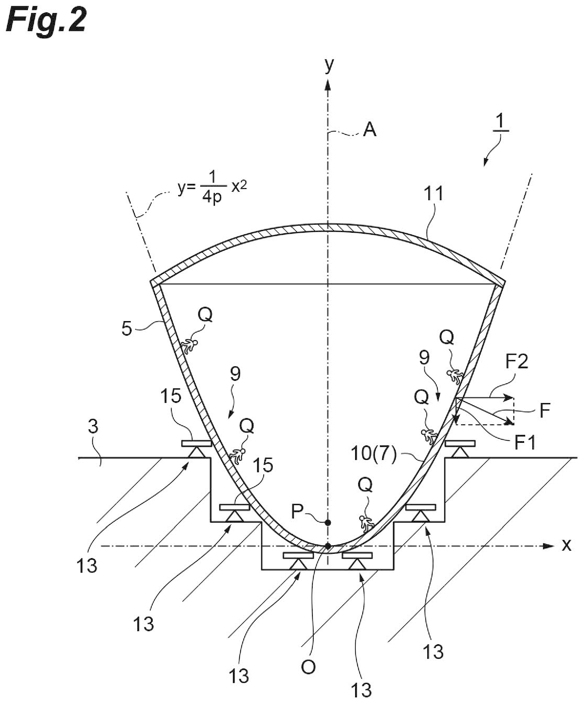

FIG. 1(a) is a perspective view of an appearance of a hypergravity facility 1 according to a first embodiment. FIG. 1(b) is a cross-sectional view of the hypergravity facility 1 with a plane orthogonal to a rotation axis A as a cross section. FIG. 2 is a cross-sectional view of the hypergravity facility 1 with a plane including the rotation axis A as a cross section. The hypergravity facility 1 is built on the earth, and generates artificial gravity F larger than the gravity of the earth to provide a hypergravity environment to a user Q. Such a hypergravity facility 1 can be used for various purposes. The hypergravity facility 1 of the present embodiment is used as a training facility that provides a training environment under hypergravity to the user Q such as an athlete, for example. When an athlete trains under hypergravity, for example, it becomes possible to train a part that cannot be trained under normal gravity.

The hypergravity facility 1 includes a pedestal portion 3 constructed on the ground and immovable with respect to the ground, and a rotating body 5 having a hollow structure rotatably supported with respect to the pedestal portion 3. The rotating body 5 rotates with respect to the pedestal portion 3 around the vertical rotation axis A. In the hypergravity facility 1, artificial gravity F is generated on the inner wall surface 7 of the rotating body 5 as a resultant force of gravity F1 of the earth and a centrifugal force F2 caused by rotation of the rotating body 5. The inner wall surface 7 functions as an artificial ground, and a training field 9 for the user Q is provided on the inner wall surface 7. That is, the inner wall surface 7 constitutes a floor surface 10 (base surface) of the training field 9. In the hypergravity facility 1, a hypergravity environment created by the artificial gravity F is simultaneously provided to a large number of users Q staying at each point of the training field 9.

In the following description, the terms "axial direction", "radial direction", and "circumferential direction" simply mean a rotation axis direction (rotation axis A direction), a rotation radial direction, and a rotation circumferential direction of the rotating body 5. Further, a direction orthogonal to the circumferential direction among in-plane directions of the floor surface 10 is referred to as a "meridional direction". That is, the meridional direction is a direction in which the floor surface 10 extends in a cross-sectional view of a cross section (FIG. 2) including the rotation axis A.

The shape of the floor surface 10 will be described. As shown in FIG. 2, in the cross-sectional view including the rotation axis A, the floor surface 10 forms a curve bulging outward. Further, as shown in FIG. 1(b), in the cross-sectional view orthogonal to the rotation axis A, the floor surface 10 forms a circle centered on the rotation axis A.

As a more specific shape, the floor surface 10 forms a paraboloid of revolution. More specifically, in the cross-sectional view (FIG. 2) including the rotation axis A, when considering an xy coordinate system in which a bottom portion of the floor surface 10 is an origin O, the rotation axis A is a y-axis, and an x-axis is taken in a horizontal direction, a cross section of the floor surface 10 draws a parabola expressed by $y = \left(1/4p\right) * {x}^{2}$ (a) Here, p [m] is a y-coordinate of the focal point P of the parabola. The floor surface 10 forms a paraboloid of revolution formed by rotating the parabola expressed by the above Formula (a) around the y-axis.

In the present embodiment, as shown in the drawing, it is assumed that the entire rotating body 5 is provided in a shape along the paraboloid of revolution with a substantially uniform thickness. However, the present invention is not limited to this, and the entire shape of the rotating body 5 may be any shape as long as the inner wall surface 7 (floor surface 10) forms a paraboloid of revolution. A roof portion 11 for closing a circular opening at the upper end of the rotating body 5 is provided at the upper end of the rotating body 5.

An example of the size of the rotating body 5 will be described. In the rotating body 5 of the present embodiment, the height p of the focal point P is 50 m with reference to the bottom portion (origin O) of the floor surface 10. Then, from Formula (a), the rotation radius of the floor surface 10 at the position of the height of the focal point P is 100 m. The total height of the rotating body 5 with reference to the origin O is determined according to the required maximum artificial gravity F, and is, for example, 300 m. Then, from Formula (a), the rotation radius of the floor surface 10 at the upper end of the rotating body 5 is 245 m.

The rotation speed [rpm] of the rotating body 5 will be described. As described above, since the floor surface 10 of the rotating body 5 forms a paraboloid of revolution, due to the property of the paraboloid of revolution, there is a special rotation speed Ns [rpm] such that artificial gravity F perpendicular to the floor surface 10 can be obtained simultaneously at all points on the floor surface 10. In other words, when the rotating body 5 is rotating at a certain special rotation speed Ns [rpm], all of the artificial gravity F generated at each point on the floor surface 10 is perpendicular to the floor surface 10 at each point. Such a rotation speed Ns is obtained as follows.

Here, an arbitrary point J on the floor surface 10 is considered, and the x-coordinate of this point J is j [m]. When Formula (a) is differentiated, $y ′ = x / 2 p$ (b) So the inclination y'(j) of the tangent line of the floor surface 10 at the point J is $y ′ \left(j\right) = j / 2 p$ (c) Further, assuming that the gravitational acceleration of the earth is G [m/s²], the gravity F1 of the earth acting on an arbitrary mass m at the point J is $F 1 = mG$ (d) Further, assuming that the angular velocity of the rotating body 5 is ω [rad/s], the centrifugal force F2 acting on an arbitrary mass m at the point J due to this rotation is $F 2 = mj {ω}^{2}$ (e) Then, the artificial gravity F at the point J, which is a resultant force of the gravity F1 and the centrifugal force F2, is $F = √ \left({F 1}^{2}+{F 2}^{2}\right)$ (f)

In order to obtain the artificial gravity F perpendicular to the floor surface 10 at the point J, the direction of a resultant force of the gravity F1 (vertical direction) and the centrifugal force F2 (horizontal direction) needs to be orthogonal to the inclination y'(j) of the tangent line of the floor surface 10 at the point J. The condition is $F 2 / F 1 = y ′ \left(j\right)$ (g) By substituting Formulas (c), (d), and (e) into Formula (g), the above condition is expressed as $mj {ω}^{2} / mG = j / 2 p$ (h) Solving this for ω, an angular velocity ω independent of j is obtained as $ω = √ \left(G/2p\right)$ (i). This angular velocity ω corresponds to the rotation speed Ns. Then, by converting this angular velocity ω [rad/s] into the rotation speed Ns [rpm], the rotation speed Ns is expressed by the following Formula (1).
[Formula 2] $Ns = \sqrt{\frac{G}{2 p}} \times \frac{30}{π}$ (1)

In the hypergravity facility 1 of the present embodiment, the rotating body 5 rotates at the rotation speed Ns [rpm] expressed by the above Formula (1). Since p = 50 [m] as described above, the rotation speed of the rotating body 5 is about 3 [rpm] from Formula (1). By such rotation of the rotating body 5, as described above, the artificial gravity F perpendicular to the floor surface 10 can be obtained simultaneously at all points on the floor surface 10.

An example of a support mechanism and a rotation mechanism for supporting and rotating the rotating body 5 will be described. As shown in FIG. 2, the pedestal portion 3 is provided with a large number of rotation drive units 13. The rotation drive units 13 are for supporting and rotationally driving the rotating body 5. Each rotation drive unit 13 has, for example, a roller 15 that rotates horizontally, and an outer peripheral surface of the roller 15 is in contact with the outer wall surface of the rotating body 5. With this configuration, each roller 15 is rotated by a predetermined power source (not shown), and the rotation of each roller is transmitted to the rotating body 5, whereby the rotating body 5 rotates around the rotation axis A.

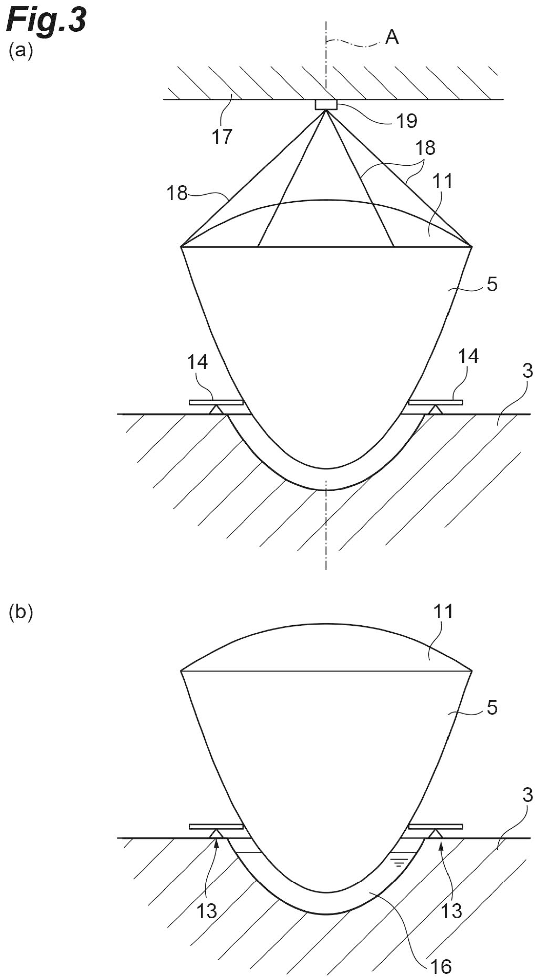

FIG. 3(a) shows another example of the support mechanism and the rotation mechanism of the rotating body 5. In this example, a support structure 17 fixed to the ground exists above the rotating body 5 and the roof portion 11. An upper end of a wire 18 is attached to the support structure 17 at a position on the rotation axis A. The rotating body 5 and the roof portion 11 are suspended and supported by the support structure 17 via the wire 18. A rotation drive unit 19 is provided at a connection portion between the support structure 17 and the wire 18. The rotation drive unit 19 horizontally rotates the wire 18, the rotating body 5, and the roof portion 11. Further, a guide roller 14 that abuts on the outer wall surface of the rotating body 5 is provided on the pedestal portion 3, and the guide roller 14 guides the horizontal rotation of the rotating body 5.

FIG. 3(b) shows still another example of the support mechanism and the rotation mechanism of the rotating body 5. In this example, a liquid 16 (for example, water) is filled between a lower portion of the rotating body 5 and the pedestal portion 3, and a part of the weight of the rotating body 5 is supported by buoyancy of the liquid 16. Then, the rotating body 5 rotates around the rotation axis A by driving of the rotation drive unit 13. The interposition of the liquid 16 reduces friction between the rotating body 5 and the pedestal portion 3. Further, by interposing the liquid 16, vibration from the ground is less likely to be transmitted to the rotating body 5 in the event of an earthquake, so that a seismic isolation effect of the rotating body 5 is obtained. Instead of the liquid 16, ice (solid water) may be filled between the lower portion of the rotating body 5 and the pedestal portion 3.

Further, in the support mechanism and the rotation mechanism of the rotating body 5, for example, a traveling system such as a train-type rail type or a linear type, a rotation system such as a disk type, or the like may be adopted. Further, in order to reduce friction between the rotating body 5 and the pedestal portion 3, bearing technology, tandem superconducting power storage technology, magnetic levitation technology using electromagnetic induction of a moving body, or the like may be adopted.

With reference to FIGS. 1 and 2, functions and effects of the hypergravity facility 1 as described above will be described. According to the hypergravity facility 1, the floor surface 10 forms a paraboloid of revolution, and the rotating body 5 rotates at the rotation speed Ns expressed by Formula (1). Thereby, the artificial gravity F perpendicular to the floor surface 10 can be obtained simultaneously at all points of the training field 9. That is, all users Q in the training field 9 can stand straight in a posture in which the vertical direction of the body is orthogonal to the floor surface 10. Therefore, all users Q can perform natural movements similar to those on a horizontal surface on the ground. In this way, a hypergravity training environment that enables natural movements can be simultaneously provided to a large number of users Q.

Further, since the floor surface 10 spreads planarly in the in-plane direction, the user Q can move relatively widely in the training field 9 in an apparent horizontal direction (in-plane direction of the floor surface 10). Further, in the training field 9, it is easy to secure a relatively wide space also in an apparent vertical direction (artificial gravity F direction). Therefore, the freedom of exercise of the user Q under hypergravity is secured. That is, the user Q can also perform training involving relatively large movements three-dimensionally under hypergravity. In this way, since the user Q can move relatively freely three-dimensionally, an environment with a high training effect under hypergravity can be provided to the user Q.

Further, since the artificial gravity F is perpendicular to the floor surface 10 at all points of the training field 9, even when the user Q moves over a relatively large distance in the training field 9 during training, a state in which the artificial gravity F is perpendicular to the floor surface 10 is always maintained. Therefore, even when performing training involving relatively large movements, the floor surface 10 feels like a horizontal surface to the user Q and, as a result, the user Q can perform natural movements similar to those on a horizontal surface on the ground.

Further, as can be seen from the above Formulas (d), (e), and (f), the magnitude of the artificial gravity F on the floor surface 10 depends on the x-coordinate (rotation radius) of the point. That is, the higher the position with reference to the origin O, the larger the artificial gravity F, and the lower the position, the smaller the artificial gravity F. Therefore, if the user Q moves in the meridional direction in the training field 9, the magnitude of the artificial gravity F at the staying place changes. Therefore, the user Q can adjust the magnitude of the artificial gravity F acting on himself/herself by a simple method such as moving in the meridional direction in the training field 9 on foot, for example. On the other hand, when the user Q moves in the circumferential direction in the training field 9, the magnitude of the artificial gravity F does not change. Therefore, the user Q can perform training involving large movement in the circumferential direction without changing the magnitude of the artificial gravity F acting on himself/herself.

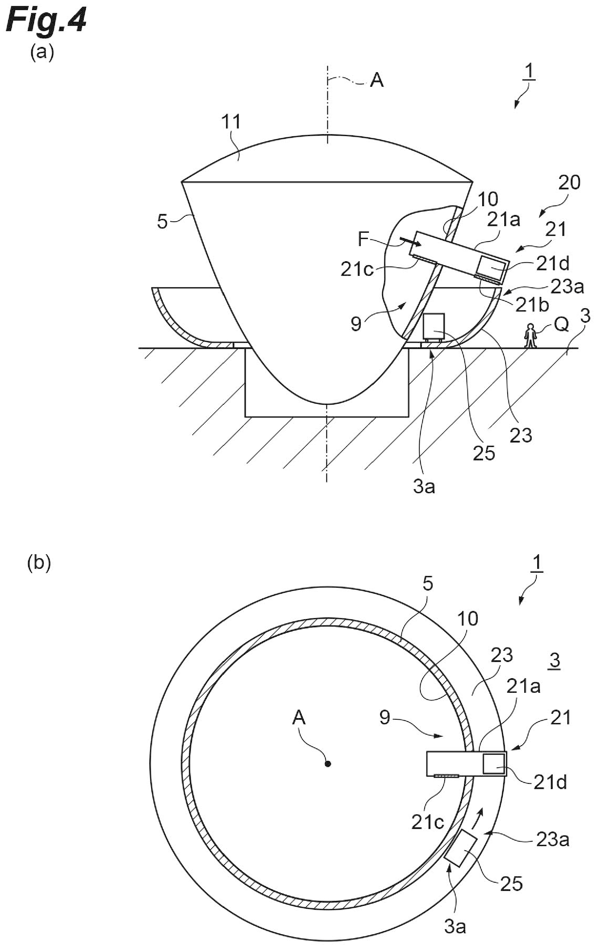

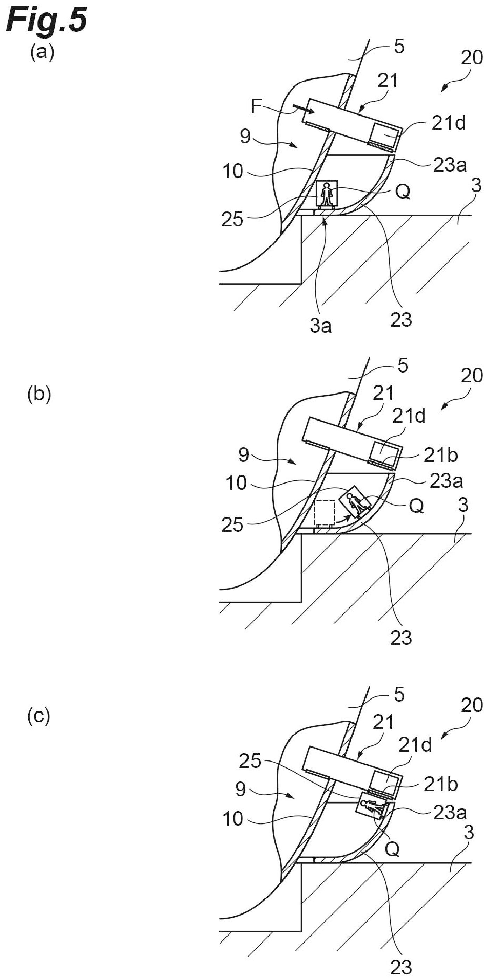

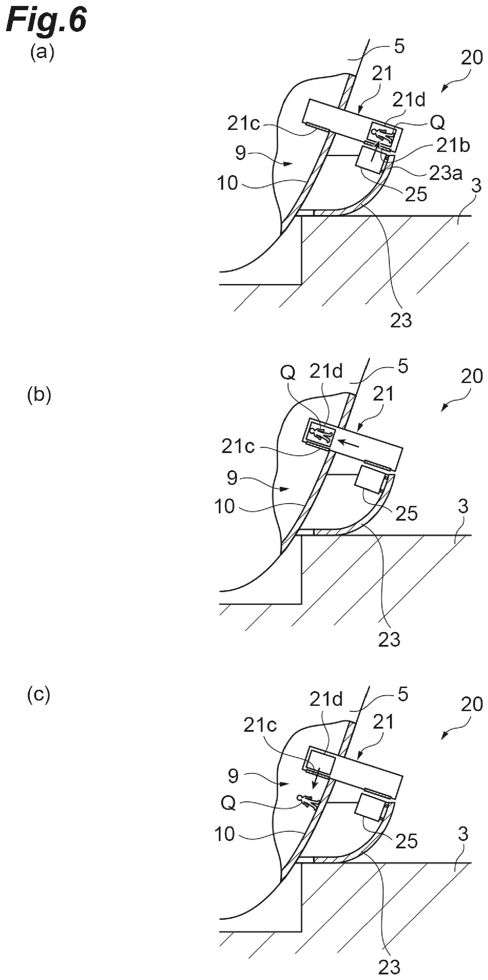

Next, transport equipment for allowing the user Q to enter and exit the training field 9 will be described with reference to FIGS. 4 to 6. FIG. 4(a) is a cross-sectional view of the transport equipment 20 with a plane including the rotation axis A as a cross section, and FIG. 4(b) is a plan view thereof. FIGS. 5(a) to 5(c) and FIGS. 6(a) to 6(c) are cross-sectional views sequentially showing operations of the transport equipment 20. In this hypergravity facility 1, when a large number of users Q are using the training field 9, it is necessary to allow some users Q to enter and exit without stopping rotation of the rotating body 5. For this reason, the hypergravity facility 1 includes the transport equipment 20. The transport equipment 20 transports the user Q from the pedestal portion 3 on the ground to the rotating training field 9. Further, the transport equipment 20 transports the user Q from the rotating training field 9 to the pedestal portion 3 on the ground. The transport equipment 20 includes an elevator 21 (entrance/exit section) provided in the rotating body 5, a travel path 23 provided outside the rotating body 5, and a vehicle 25 traveling on the travel path 23 in the circumferential direction. In FIGS. 1 to 3, illustration of the transport equipment 20 is omitted.

The elevator 21 is constructed on a wall body of the rotating body 5 at a predetermined height position of the rotating body 5, and turns in the circumferential direction as the rotating body 5 rotates. The elevator 21 has an elevator shaft 21a penetrating the floor surface 10 perpendicularly thereto. The shaft 21a extends in a direction of the artificial gravity F at the point. Further, the elevator 21 has a transfer port 21b located outside an outer peripheral surface of the rotating body 5, and an entrance/exit 21c located inside the floor surface 10. An elevator car 21d, which is a box body on which the user Q and luggage are placed, is installed in the shaft 21a. The car 21d reciprocates in the shaft 21a between the transfer port 21b and the entrance/exit 21c. With such a configuration, the elevator 21 can move the user Q and luggage between the transfer port 21b and the floor surface 10 in the direction of the artificial gravity F through the floor surface 10.

The travel path 23 is constructed on the pedestal portion 3 and is immovable with respect to the ground of the earth. The travel path 23 extends in the circumferential direction along the outer wall surface of the rotating body 5 at a position slightly lower than the transfer port 21b of the elevator 21, and does not interfere with the turning elevator 21. In the plan view (FIG. 4(b)), the travel path 23 has an annular shape surrounding the rotating body 5. In the cross-sectional view (FIG. 4(a)) including the rotation axis A, the travel path 23 has a shape that separates from the rotation axis A in the radial direction as it moves upward, and has a curved shape bulging outward in the radial direction. An upper end portion 23a of the travel path 23 is adjacent to a turning track of the transfer port 21b of the elevator 21.

In the cross-sectional view (FIG. 4(a)) including the rotation axis A, a tangent line of a lower end portion of the travel path 23 is substantially horizontal, and a boarding/alighting place 3a for the user Q to board and alight from the vehicle 25 is provided at the lower end portion. An inclination of a tangent line of the upper end portion 23a of the travel path 23 is as follows. In the cross-sectional view (FIG. 4(a)) including the rotation axis A, the tangent line of the upper end portion 23a of the travel path 23 is substantially orthogonal to a direction of a resultant force of a centrifugal force acting on the vehicle 25 and the gravity of the earth when an angular velocity of the vehicle 25 is equal to an angular velocity of the rotating body 5 at the upper end portion 23a. That is, when the vehicle 25 travels on the travel path 23 in the circumferential direction, apparent gravity acts on the vehicle 25 as a resultant force of a centrifugal force caused by turning around the rotation axis A and the gravity of the earth. Then, a case is considered where a travel position of the vehicle 25 in a vehicle width direction is the upper end portion 23a of the travel path 23, and an angular velocity of turning of the vehicle 25 is equal to the angular velocity of the rotating body 5. The travel path 23 is designed such that the tangent line of the upper end portion 23a of the travel path 23 is substantially orthogonal to the direction of the apparent gravity at this time.

Note that the positional difference between the elevator 21 and the travel path 23 compared to the size of the rotating body 5 may be considered to be negligibly small, and the apparent gravity acting on the vehicle 25 may be considered to be the same as the artificial gravity F in the vicinity of the elevator 21. Then, in the cross-sectional view (FIG. 4(a)) including the rotation axis A, the tangent line of the upper end portion 23a of the travel path 23 is substantially orthogonal to the artificial gravity F in the vicinity of the elevator 21, and the road surface of the upper end portion 23a of the travel path 23 may be considered to be substantially parallel to the floor surface 10 in the vicinity of the elevator 21.

The vehicle 25 (moving body) is a vehicle that travels on the travel path 23 in the circumferential direction and moves back and forth between the boarding/alighting place 3a on the pedestal portion 3 and the transfer port 21b. The vehicle 25 transports the user Q, who intends to enter the training field 9 from the ground (pedestal portion 3), from the boarding/alighting place 3a to the transfer port 21b. Further, the vehicle 25 transports the user Q, who intends to exit the training field 9 and return to the ground (pedestal portion 3), from the transfer port 21b to the boarding/alighting place 3a.

Operation of the transport equipment 20 will be described. Hereinafter, a procedure for allowing the user Q on the ground (pedestal portion 3) to enter the training field 9 will be described. As shown in FIG. 5(a), the user Q (entering person) boards the vehicle 25 stopped at the boarding/alighting place 3a on the pedestal portion 3. Thereafter, the vehicle 25 starts and accelerates while traveling on the travel path 23 in the circumferential direction. As the vehicle 25 accelerates, as shown in FIG. 5(b), the position of the vehicle 25 in the vehicle width direction gradually rises toward the upper end portion 23a side of the travel path 23. That is, strictly speaking, the vehicle 25 travels on the travel path 23 in a spiral track centered on the rotation axis A. Thereafter, as shown in FIG. 5(c), the vehicle 25 reaches the upper end portion 23a of the travel path 23. Then, at the upper end portion 23a, the vehicle 25 is adjusted in position and speed so as to be adjacent to the transfer port 21b of the turning elevator 21 and to make the relative speed with the transfer port 21b zero.

In a state where the position adjustment and the speed adjustment are performed as described above, as shown in FIG. 6(a), the vehicle 25 is located immediately adjacent in the meridional direction to the car 21d waiting at the transfer port 21b. In this state, the user Q gets off the vehicle 25 and transfers to the car 21d. Thereafter, as shown in FIG. 6(b), the car 21d penetrates the floor surface 10 and moves to the entrance/exit 21c. Then, as shown in FIG. 6(c), the user Q gets off the car 21d at the entrance/exit 21c and lands on the floor surface 10, thereby entering the training field 9.

Further, by a procedure reverse to the above, the user Q in the training field 9 can exit and return to the boarding/alighting place 3a of the pedestal portion 3. That is, the user Q (exiting person) in the training field 9 boards the car 21d waiting at the entrance/exit 21c, and this car 21d moves to the transfer port 21b. At this time, the vehicle 25 is traveling on the upper end portion 23a of the travel path 23 in a state of being adjacent to the transfer port 21b and having a relative speed of zero with the transfer port 21b. The user Q gets off the car 21d and transfers to the vehicle 25. Then, the vehicle 25 decelerates while traveling on the travel path 23 in the circumferential direction, and the position of the vehicle 25 in the vehicle width direction gradually descends toward the height of the boarding/alighting place 3a. Then, when the vehicle 25 arrives at the boarding/alighting place 3a and stops, the user Q gets off the vehicle 25 onto the pedestal portion 3.

According to the transport equipment 20 as described above, the user Q can enter and exit the training field 9 without stopping rotation of the rotating body 5. At this time, at the boarding/alighting place 3a, the user Q boards and alights in a state where the vehicle 25 is stopped, ensuring safety. Further, at the transfer port 21b, the user Q transfers in a state where the vehicle 25 and the elevator 21 are stopped relative to each other, ensuring safety.

Further, as shown in FIG. 5(b), during acceleration/deceleration on the travel path 23, the vehicle 25 gradually changes its posture from a posture corresponding to a direction of gravity (gravity F1 of the earth or artificial gravity F) at a boarding place to a posture corresponding to a direction of gravity (artificial gravity F or gravity F1 of the earth) at an alighting place. Therefore, both when boarding and alighting from the vehicle 25, the user Q can board and alight from the vehicle 25 with the same feeling as on a horizontal surface on the ground. For example, at the time of transfer at the transfer port 21b, the vehicle 25 is in a posture in which a vertical direction of the vehicle body is directed in the direction of the artificial gravity F. Therefore, the user Q can transfer between the vehicle 25 and the car 21d which are adjacent to each other in the meridional direction with the same feeling as on a horizontal surface on the ground.

Further, at the boarding/alighting place 3a at the lower end portion of the travel path 23, since the tangent line of the travel path 23 is substantially horizontal, a force in a direction in which the vehicle 25 stopped at the boarding/alighting place 3a skids on the travel path 23 is hardly generated. Further, at the upper end portion 23a of the travel path 23, since the apparent gravity acting on the vehicle 25 is substantially orthogonal to the tangent line of the travel path 23, a force in a direction in which the vehicle 25 skids on the travel path 23 is hardly generated at this time as well. Further, in the cross-sectional view (FIG. 4(a)) including the rotation axis A, the travel path 23 has a shape that separates from the rotation axis A in the radial direction as it moves upward, and has a curved shape bulging outward in the radial direction. Therefore, the vehicle 25 can gradually shift the travel position in the vehicle width direction on the travel path 23 toward the upper end portion 23a side with acceleration, and can gradually shift the travel position in the vehicle width direction on the travel path 23 toward the boarding/alighting place 3a with deceleration. In this way, since the vehicle 25 can safely travel on the travel path 23, the transport equipment 20 can be safely operated, and the user Q can be safely transported.

Note that a rail or the like for causing the vehicle 25 to travel may be provided on the travel path 23. Further, a gripping device (not shown) for gripping and fixing the vehicle 25 may be provided in the vicinity of the transfer port 21b of the elevator 21. In this case, when a relative speed between the vehicle 25 and the transfer port 21b becomes zero (FIG. 5(c)), the vehicle 25 may be gripped by the gripping device and fixed to the elevator 21. This enables safer transfer of the user Q. Further, it is not necessary for the vehicle 25 to travel on the travel path 23 by itself during transfer or the like.

Further, instead of the elevator 21, for example, stairs connecting the transfer port 21b and the entrance/exit 21c may be provided. In this case, the user Q can move on foot between the transfer port 21b and the entrance/exit 21c by going up and down the stairs. Further, the user Q may move along a part of a movement route between the transfer port 21b and the entrance/exit 21c by the elevator 21, and move along the rest by stairs.

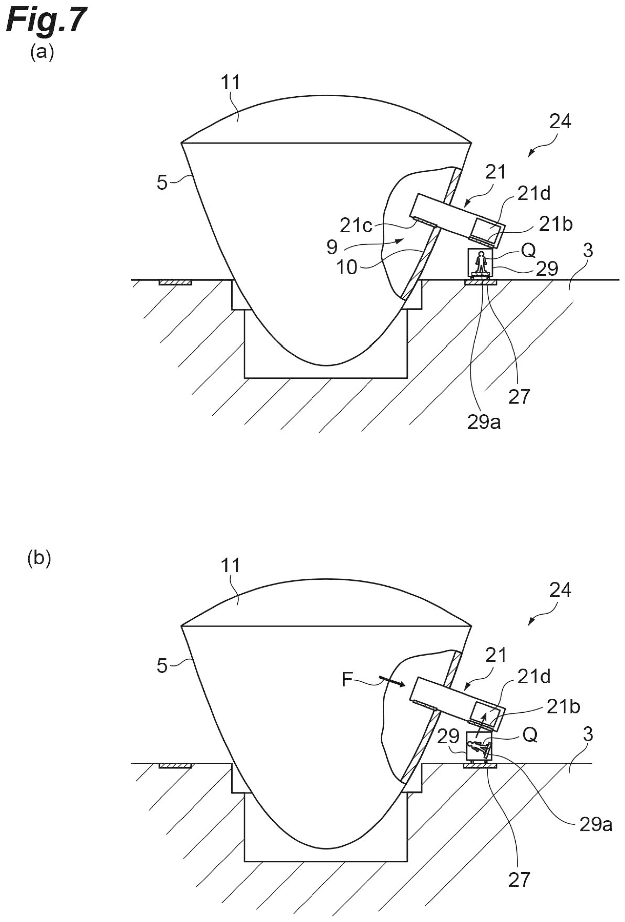

Further, instead of the transport equipment 20 as described above, transport equipment 24 as shown in FIG. 7(a) may be adopted. The transport equipment 24 includes a travel path 27 and a vehicle 29 instead of the travel path 23 and the vehicle 25 in the transport equipment 20. The travel path 27 is provided on the pedestal portion 3 and extends in the circumferential direction along the outer wall surface of the rotating body 5 at a position immediately below the transfer port 21b of the elevator 21. The road surface of the travel path 27 is substantially horizontal over its entirety. The vehicle 29 travels on this travel path 27 in the circumferential direction and does not interfere with the turning elevator 21. The inclination of the floor 29a of the cabin of the vehicle 29 is variable. That is, the floor 29a is inclined by a predetermined actuator so as to generate a height difference in the vehicle width direction, and the magnitude of this inclination can be adjusted.

Such transport equipment 24 also enables safe transfer of the user Q at the transfer port 21b. That is, when the vehicle 29 carrying the user Q heading for the training field 9 on the pedestal portion 3 accelerates, the floor 29a gradually inclines in a direction in which the outer peripheral side becomes higher by the driving of the actuator. Thereafter, as shown in FIG. 7(b), when the vehicle 29 and the transfer port 21b are adjacent to each other and the relative speed becomes zero, the floor 29a of the vehicle 29 becomes perpendicular to the artificial gravity F at the point. In this state, the user Q gets off the vehicle 29 and transfers to the car 21d. Therefore, the user Q can transfer to the car 21d from a state of standing on the floor 29a perpendicular to the artificial gravity F with the same feeling as on a horizontal surface on the ground. Further, by a reverse procedure, the user Q heading from the training field 9 to the ground can safely transfer from the car 21d to the vehicle 29.

According to the transport equipment 20 and 24, not only movement of the user Q as described above, but also movement of a carried-in object carried into the training field 9 from the ground and movement of a carried-out object carried out to the ground from the training field 9 can be executed by the same procedure.

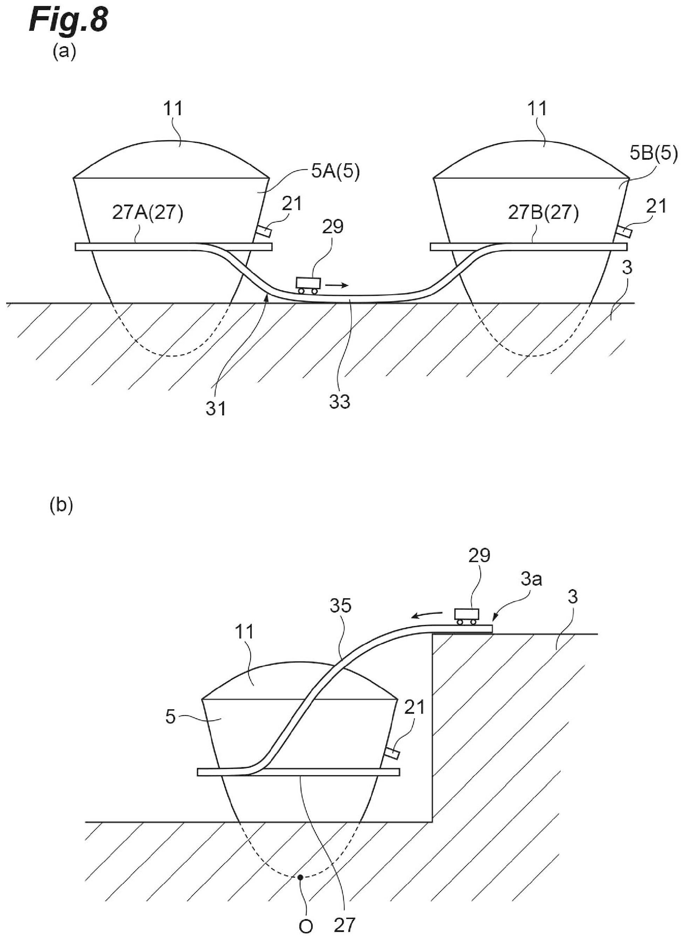

If a plurality of rotating bodies 5 exist as shown in FIG. 8(a), a connection path 31 for enabling the vehicle 29 to travel back and forth between them may be provided. The connection path 31 has a travel path 27 (referred to as a travel path 27A) provided around one rotating body 5 (referred to as a rotating body 5A), a travel path 27 (referred to as a travel path 27B) provided around the other rotating body 5 (referred to as a rotating body 5B), and a connection path 33 connecting the travel paths 27A and 27B to each other. The connection path 33 may pass through a position lower than the travel paths 27A and 27B as in the illustrated example.

The operation of the connection path 31 and the vehicle 29 is as follows. First, in order to carry the user Q from the rotating body 5A, the vehicle 29 travels on the travel path 27A close to the elevator 21 of the rotating body 5A at a relative speed of zero. After the user Q transfers from the car 21d (see FIG. 7) of the elevator 21 to this vehicle 29, the vehicle 29 leaves the travel path 27A and enters the connection path 33. Thereafter, the vehicle 29 enters the travel path 27B from the connection path 33, and performs position adjustment and speed adjustment on the travel path 27B. Then, in a state where the vehicle 29 is close to the elevator 21 of the rotating body 5B and the relative speed becomes zero, the user Q transfers from this vehicle 29 to the car 21d (see FIG. 7) of the elevator 21 of the rotating body 5B.

According to such operation, kinetic energy of the vehicle 29 turning with the rotating body 5A when the user Q boards can be effectively used as kinetic energy for turning with the rotating body 5B when the user Q alights. Therefore, it is only necessary to supply the vehicle 29 with energy corresponding to a loss due to air resistance, friction, or the like, and energy saving is achieved. Note that the shapes of the connection path 33 and the travel paths 27A and 27B in a plan view may be a spiral shape. Further, a clothoid curve or the like may be adopted for the shapes of the connection path 33 and the travel paths 27A and 27B in a plan view.

Further, as shown in FIG. 8(b), the boarding/alighting place 3a on the pedestal portion 3 may be provided at a position higher than the travel path 27. In this case, the height of the boarding/alighting place 3a with reference to the bottom portion (origin O) of the floor surface 10 is assumed to be about twice the height of the travel path 27. The boarding/alighting place 3a is connected to the travel path 27 via an acceleration/deceleration path 35. In this case, after the user Q boards the vehicle 29 stopped at the boarding/alighting place 3a, the vehicle 29 starts and accelerates due to a downward gradient of the acceleration/deceleration path 35 and enters the travel path 27. Thereafter, the vehicle 29 performs position adjustment and speed adjustment on the travel path 27, and in a state where the vehicle 29 is close to the elevator 21 and the relative speed becomes zero, the user Q transfers from this vehicle 29 to the car 21d (see FIG. 7) of the elevator 21. Further, by a procedure reverse to the above, the user Q from the training field 9 can be moved to the boarding/alighting place 3a.

In this case, when the vehicle 29 moves from the boarding/alighting place 3a to the travel path 27, the vehicle 29 is accelerated using the height difference. Then, when the vehicle 29 moves from the travel path 27 to the boarding/alighting place 3a, the vehicle 29 is decelerated using the height difference. Here, according to calculations by the present inventors, when the height of the boarding/alighting place 3a is about twice the height of the travel path 27, theoretically, the potential energy of the vehicle 29 due to the height difference between the boarding/alighting place 3a and the travel path 27 is equal to the kinetic energy of the vehicle 29 corresponding to the peripheral speed of the turning elevator 21. Therefore, the vehicle 29 can reciprocate between the boarding/alighting place 3a and the travel path 27 by alternately converting the potential energy and the kinetic energy. Therefore, it is only necessary to supply the vehicle 29 with energy corresponding to a loss due to air resistance, friction, or the like, and energy saving is achieved. Note that the shape of the acceleration/deceleration path 35 in a plan view may be a spiral shape. Further, a clothoid curve or the like may be adopted for the shape of the acceleration/deceleration path 35 in a plan view.

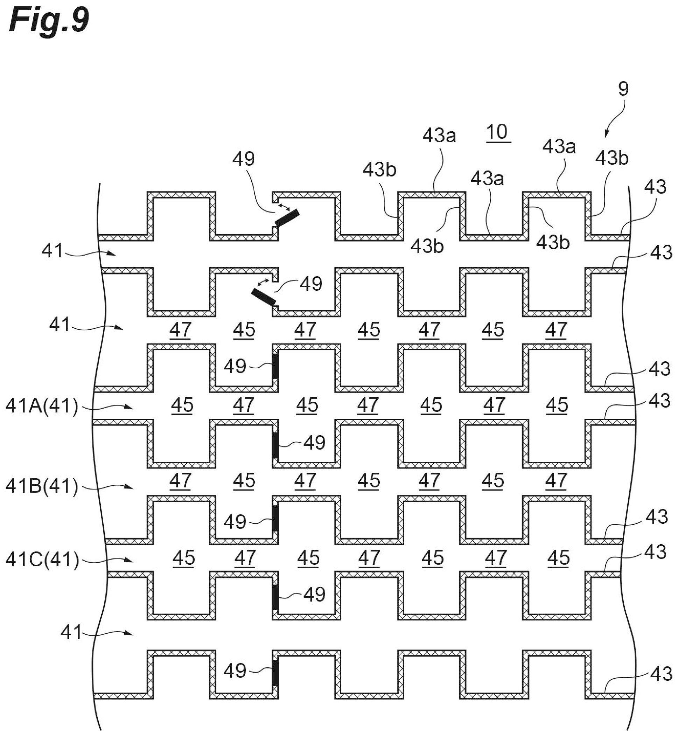

Next, a configuration for partitioning the training field 9 into a plurality of training regions 41 having different artificial gravity F will be described with reference to FIG. 9. FIG. 9 is a plan view of the training field 9 viewed from a direction perpendicular to the floor surface 10. In FIG. 9, the up-down direction in the drawing is the meridional direction, and the left-right direction in the drawing is the circumferential direction. The floor surface 10 is provided with a plurality of partition walls 43 rising in the direction of the artificial gravity F (a direction orthogonal to the floor surface 10). The partition wall 43 illustrated in FIG. 9 is configured in a zigzag shape by alternately connecting a circumferential portion 43a extending in the circumferential direction and a meridional portion 43b extending in the meridional direction, and the partition wall 43 as a whole extends in the circumferential direction. By providing a plurality of such partition walls 43, the training field 9 is divided into a plurality of training regions 41 arranged in the meridional direction.

Further, one training region 41 sandwiched between two partition walls 43, 43 is configured by alternately connecting a room portion 45 wide in the meridional direction and a narrow connection passage 47 connecting the room portions 45 in the rotation circumferential direction in the circumferential direction. Looking at three training regions 41A, 41B, and 41C arranged in order in the meridional direction, the connection passage 47 of the training region 41B is formed so as to be sandwiched between the room portion 45 of the training region 41A and the room portion 45 of the training region 41C. Further, the room portion 45 of the training region 41B is formed so as to be sandwiched between the connection passage 47 of the training region 41A and the connection passage 47 of the training region 41C. An openable/closable entrance/exit 49 is formed in a part of the meridional portion 43b of each partition wall 43. The user Q can go back and forth between the adjacent training regions 41 through the entrance/exit 49.

According to the configuration of the hypergravity facility 1 as described above, even if rotation of the rotating body 5 decelerates due to an unlikely malfunction or the like, the user Q is prevented from sliding and moving in the meridional direction along the floor surface 10 by the partition wall 43. Further, in order to ensure the safety of the user Q in this case, a cushioning material may be provided on the floor surface 10 in the training region 41 or on a wall surface of the partition wall 43.

Further, the training region 41 is formed relatively long in the circumferential direction by the room portion 45 and the connection passage 47. Therefore, the user Q in the training region 41 can perform training involving movement over a relatively long distance in the circumferential direction without changing the magnitude of the artificial gravity F acting on himself/herself. Further, the user Q can also adjust the magnitude of the artificial gravity F acting on himself/herself by moving in the meridional direction between the training regions 41 through the entrance/exit 49.

### [Second Embodiment]

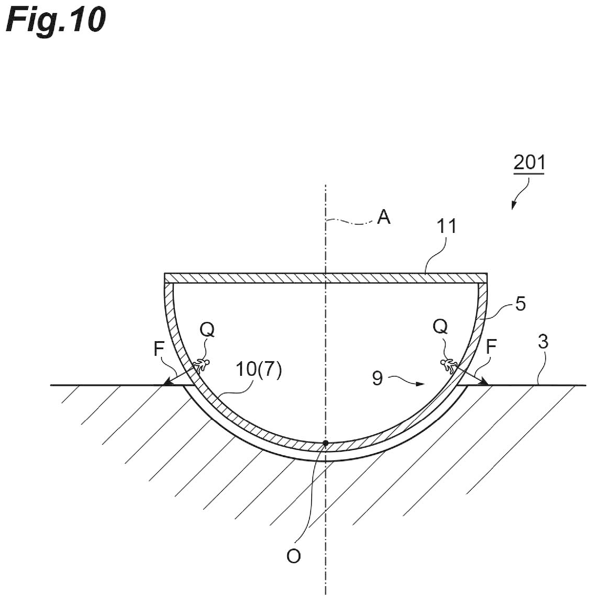

The floor surface 10 of the rotating body 5 is not limited to a paraboloid of revolution, and may be a part or all of a spherical surface having a center C on the rotation axis A as shown in FIG. 10. In the hypergravity facility 1B in the present embodiment, the floor surface 10 forms a hemispherical surface which is a lower half of a spherical surface. In this case, there is no rotation speed such that artificial gravity F perpendicular to the floor surface 10 can be obtained simultaneously at all points on the floor surface 10. In this rotating body 5, the artificial gravity F becomes perpendicular to the floor surface 10 only at a single height position on the floor surface 10, and the height of the position depends on the rotation speed of the rotating body 5. In the vicinity of this single height position, all users Q in the training field 9 will perform training. Further, as the rotation of the rotating body 5 becomes faster, the position of the floor surface 10 where the perpendicular artificial gravity F is generated becomes higher, and the artificial gravity F becomes larger. When changing the magnitude of the artificial gravity F provided to the user Q, the rotation speed of the rotating body 5 is changed, and the user Q moves to a point where the artificial gravity F perpendicular to the floor surface 10 is generated. At this time, the magnitude of the artificial gravity F acting on all users Q is simultaneously changed.

Also in the hypergravity facility 1B having the floor surface 10 forming such a spherical surface, the floor surface 10 spreads planarly in the in-plane direction, and it is easy to secure a relatively wide space also in the direction of the artificial gravity F. Therefore, similarly to the hypergravity facility 1 of the first embodiment, the freedom of exercise of the user Q under hypergravity is secured. However, when the user Q moves in the meridional direction in the training field 9, an intersection angle between the artificial gravity F and the floor surface 10 changes according to the movement distance. Then, the floor surface 10 is felt as an inclined surface from the viewpoint of the user Q, and natural movement becomes difficult. Therefore, the movement of the user Q in the meridional direction is possible within a range in which the inclination felt by the user Q is allowable.

The present disclosure can be implemented in various forms with various changes and improvements based on the knowledge of those skilled in the art, including the above-described embodiments. Further, it is also possible to configure a modification of the example by using the technical matters described in the above-described embodiments. The configurations of each embodiment and the like may be appropriately combined and used.

For example, a moving body for transporting the user Q or the like between the pedestal portion 3 and the transfer port 21b is not limited to the vehicles 25 and 29, and a flying object such as an aircraft may be adopted. Further, the floor surface 10 is not limited to forming a paraboloid of revolution or a spherical surface, and may form another surface of revolution. The "surface of revolution" is a three-dimensional surface generated by rotating one curve or straight line in space around a predetermined straight line (rotation axis). For example, the floor surface 10 may be a conical surface.

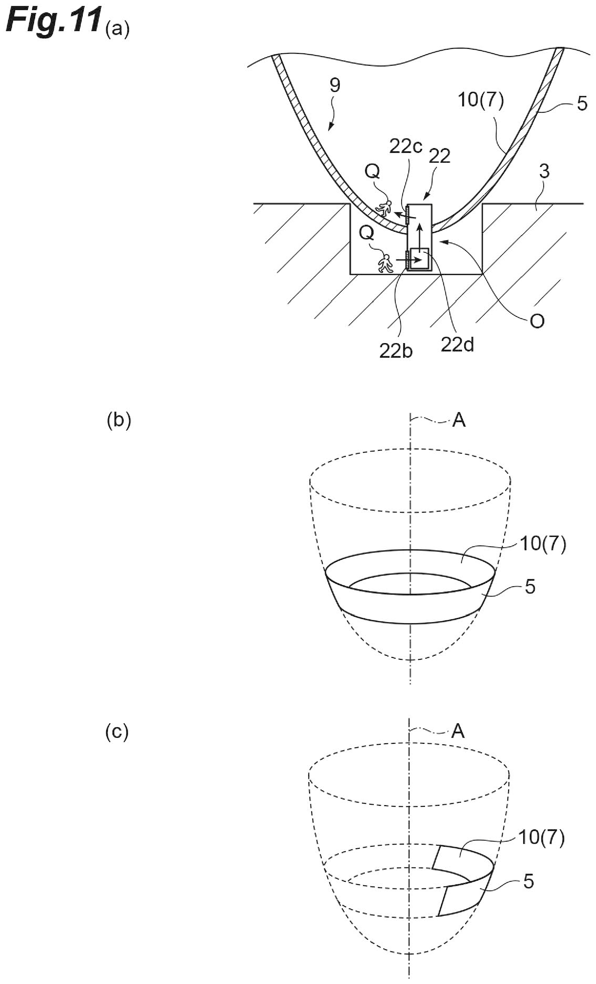

Further, as equipment for allowing the user Q or the like to enter and exit the training field 9, an elevator 22 as shown in FIG. 11(a) may be adopted instead of the transport equipment 20 and 24 described above. The elevator 22 is provided at a position of a bottom portion of the floor surface 10 and extends along the rotation axis A. The elevator 22 is different from the elevator 21 (FIG. 4) described above in that it is rotatable around its own axis with respect to the rotating body 5. By such rotation, a relative rotation speed between the elevator 22 and the pedestal portion 3 can be made zero, and the user Q can safely transfer between the pedestal portion 3 and a car 22d. Further, when the user Q transfers between the floor surface 10 and the car 22d, rotation of the elevator 22 with respect to the rotating body 5 is stopped. Note that a mechanism for rotating the elevator 22 around its own axis as described above may be omitted. In this case, the elevator 22 always rotates together with the rotating body 5 with respect to the pedestal portion 3. However, since this rotation is relatively slow, for example, about 3 [rpm], the user Q can relatively easily transfer between the pedestal portion 3 and the car 22d at the transfer port 22b. Further, in addition to the transport equipment 20 or the transport equipment 24, the elevator 22 may be further provided.

Further, the floor surface 10 of the rotating body 5 in the hypergravity facility 1 does not need to form an entire paraboloid of revolution, and the floor surface 10 may form a part of a paraboloid of revolution. That is, as shown in FIG. 11(b), the floor surface 10 of the rotating body 5 may have a shape obtained by cutting out a part of a paraboloid of revolution in the axial direction, or as shown in FIG. 11(c), may have a shape obtained by further cutting out a part thereof in the circumferential direction. In order to sufficiently secure the freedom of movement of the user Q in the training field 9 as described above on such a floor surface 10, the size of the floor surface 10 is preferably 30 m or more in the meridional direction and 30 m or more in the circumferential direction. Similarly, in the hypergravity facility 1B, the floor surface 10 of the rotating body 5 does not need to form an entire spherical surface, and the floor surface 10 may form a part of a spherical surface.

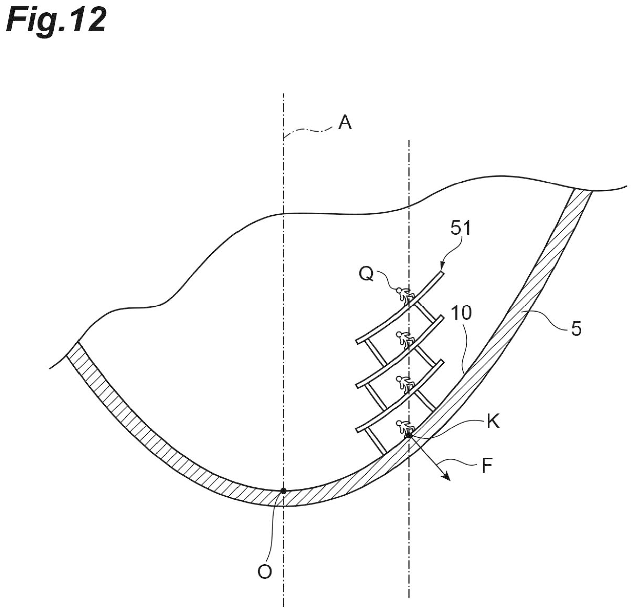

Further, in the hypergravity facilities 1 and 1B, a multi-story building 51 may be provided on the floor surface 10 as shown in FIG. 12 for the purpose of increasing the capacity of the training field 9 or the like. In the illustrated example, the building 51 is a four-story building and is built at the position of a point K on the floor surface 10. The floor surfaces of each floor of the building 51 are arranged in the vertical direction (rotation axis A direction). Further, the floor surface of each floor of the building 51 is parallel to the floor surface 10 at the point K. That is, the rotation radius and the direction of the floor surface of each floor are all equal to the rotation radius and the direction of the point K. Here, as can be seen from the above Formulas (d), (e), and (f), since the magnitude and the direction of the artificial gravity F depend on the x-coordinate (rotation radius) of the point, the magnitude and the direction of the artificial gravity F generated on the floor surface of each floor of the building 51 are the same as the artificial gravity F on the floor surface 10 at the point K. Therefore, on the floor surface of each floor, artificial gravity F perpendicular to the floor surface and having the same magnitude as that on the floor surface 10 at the point K is obtained. Therefore, on the floor surface of each floor of the building 51, training similar to that on the floor surface 10 at the point K can be performed.

For example, the hypergravity facilities 1 and 1B are not limited to training applications under hypergravity, and can also be used for applications aiming at medical effects such as osteoporosis prevention, bone density improvement, blood flow improvement, optic nerve improvement, visual reflex nerve improvement, and rehabilitation. Further, the hypergravity facilities 1 and 1B can also be used as a hypergravity resistance training facility, an amusement facility, a scientific experiment facility for the purpose of science education, and the like. Further, the hypergravity facilities 1 and 1B can also be used as a pseudo-residence experience facility for confirming the comfort of an extraterrestrial celestial body having gravity larger than that of the earth. Furthermore, when considering an artificial gravity facility that reproduces gravity 1G equivalent to that of the earth in a celestial body having gravity smaller than that of the earth (for example, the moon, Mars, etc.), the hypergravity facilities 1 and 1B can also be used as a facility for experiencing the shape of such an artificial gravity facility.

In the hypergravity facilities 1 and 1B, various types of training and experiments can also be performed by adjusting parameters such as the rotation speed of the rotating body 5 and the atmospheric pressure in the training field 9. Further, by making the inside of the rotating body 5 a closed space, it is also possible to confirm changes in air quality due to human high-frequency activities and the operation followability of an ECLSS system (manned space stay technology (life support/environmental control technology)) of a regenerative ecological support system. Further, by using the hypergravity facilities 1 and 1B, it is also possible to predict gravity-related problems on an extraterrestrial celestial body by confirming growth of microorganisms, insects, small animals, plants, and the like under hypergravity.

### Reference Signs List

1, 1B: hypergravity facility, 5: rotating body, 10: floor surface (base surface), 21: elevator (entrance/exit section), 23: travel path, 23a: upper end portion, 25: vehicle (moving body), 27: travel path, 41: training region, 43: partition wall, 43a: circumferential portion, 43b: meridional portion, 45: room portion, 47: connection passage, 49: entrance/exit, A: rotation axis, C: center, F: artificial gravity, F1: gravity of the earth, F2: centrifugal force, P: focal point, Q: user.

## Claims

1. A hypergravity facility that generates, on the earth, artificial gravity larger than the gravity of the earth, the hypergravity facility comprising:
a rotating body that rotates around a vertical rotation axis, generating the artificial gravity on a base surface inside the rotating body as a resultant force of the gravity of the earth and a centrifugal force caused by rotation of the rotating body,
wherein in a cross-sectional view orthogonal to the rotation axis, the base surface extends along a circle centered on the rotation axis, and
in a cross-sectional view including the rotation axis, the base surface forms a curve bulging outward.

2. The hypergravity facility according to claim 1,
wherein the base surface is at least a part of a paraboloid of revolution formed by rotating a parabola around the rotation axis.

3. The hypergravity facility according to claim 2,
wherein when a height from a bottom of the paraboloid of revolution to a focal point is p [m] and a gravitational acceleration of the earth is G [m/s²],
a rotation speed Ns [rpm] of the rotating body is expressed by the following Formula (1).
[Formula 1] $Ns = \sqrt{\frac{G}{2 p}} \times \frac{30}{π}$ (1)

4. The hypergravity facility according to claim 1, comprising:
a moving body that moves outside the rotating body in a rotation circumferential direction of the rotating body; and
an entrance/exit section that is installed in the rotating body, is capable of moving an entering person or a carried-in object transferred from the moving body to the inside of the rotating body through the base surface, and is capable of transferring an exiting person and a carried-out object moved from the inside of the rotating body to the outside through the base surface to the moving body.

5. The hypergravity facility according to claim 4,
wherein the moving body is a traveling vehicle that travels in the rotation circumferential direction of the rotating body on a travel path that is immovable with respect to the earth and is located outside the rotating body,
the travel path in a cross-sectional view including the rotation axis has a shape that separates from the rotation axis in a rotation radial direction as it moves upward,
a tangent line of a lower end portion of the travel path in the cross-sectional view is substantially horizontal, and
a tangent line of an upper end portion of the travel path in the cross-sectional view is substantially orthogonal to a direction of a resultant force of a centrifugal force acting on the moving body and the gravity of the earth when an angular velocity of the moving body is equal to an angular velocity of the rotating body at the upper end portion.

6. The hypergravity facility according to claim 1,
wherein the base surface is provided with a plurality of partition walls that rise in a direction of the artificial gravity and partition the base surface in a meridional direction,
each of the partition walls is configured by connecting a portion extending in a circumferential direction of the rotating body and a portion extending in the meridional direction when viewed from the direction of the artificial gravity, and
one region partitioned by the partition walls is configured by alternately connecting a room portion wide in the meridional direction and a connection passage connecting the room portions in a rotation circumferential direction.

7. The hypergravity facility according to claim 6,
wherein an entrance/exit that enables movement between the adjacent regions is provided in a portion of the partition walls that extends in the meridional direction.

8. The hypergravity facility according to claim 1,
wherein the base surface is at least a part of a spherical surface having a center on the rotation axis.
